# EUROPEAN PATENT SPECIFICATION

(11) **EP 1 240 798 B1**
(45) Date of publication and mention of the grant of the patent: **03.09.2008**
(21) Application number: 00985747.5
(22) Date of filing: 21.12.2000
(51) Int. Cl.: H04Q 7/38

(54) **PRE-PAID ROAMING IN MOBILE TELECOMMUNICATION NETWORKS**
VORAUSBEZAHLTES UMHERSTREIFEN IN MOBILEN TELEKOMMUNIKATIONSNETZEN
ITINERANCE A PREPAIEMENT DANS DES RESEAUX DE TELECOMMUNICATION MOBILE

(30) Priority: 23.12.1999 IE 991093
(43) Date of publication of application: 18.09.2002
(73) Proprietor: Markport Limited, Dublin 1 (IE)
(72) Inventor: AITKEN, David James, Harbourmaster Place, Dublin 1 (IE); DILLON, Aidan, Blackrock, County Dublin (IE)
(74) Representative: O'Brien, John Augustine
(86) International application number: PCT/IE2000/000164
(87) International publication number: WO 2001/049057

(56) References cited:
- WO-A-96/36912
- WO-A-99/23810
- WO-A-99/30480
- GB-A- 2 344 490

## Description

### INTRODUCTION

### Field of the Invention

The invention relates to provision of pre-paid roaming functionality in mobile telecommunication networks.

### Prior Art Discussion

The provision of such functionality has been considered as part of on-going development of mobile network standards. This has arisen because of the increasing commercial importance of pre-paid use of mobile handsets and, of course, an increasing demand for roaming capability between networks such as GSM and ANSI41.

In this respect, document WO 99/23810 discloses a method of prepaying for access to a wireless telecommunication network by storing updated subscriber credit information within the mobile terminal, which is subsequently available for use by other networks.

There is therefore a need to provide a system and method to provide this service.

Another object is that the service involve very little modification of existing networks.

### Glossary of Abbreviated Terms

- API: Application Programming Interface
- ANSI: American National Standards Institute
- CS: Capability Set
- CORBA: Common Object Request Broker Architecture
- CUSP: Call Unrelated Service Point
- GSM: Global System for Mobile communications
- HP-UX: Hewlett Packard Unix
- HLR: Home Location Register
- IP: Internet Protocol
- IMSI: International Mobile Subscriber Identity
- INAP: Intelligent Network Application Part
- ISDN: Integrated Services Digital Network
- MAP: Mobile Application Part
- MDN: Mobile Directory Number
- MIN: Mobile Identification Number
- MSC: Mobile Switching Centre
- MSDP: Mobile Services Data Platform
- MSISDN: Mobile Subscriber ISDN Number
- MTP: Message Transfer Part
- PDC: Personal Digital Cellular
- SCCP: Signalling Connection Control Part
- SCF: Service Control Function
- SDF: Service Data Function
- SDL: Specification and Description Language
- SQL: Structured Query Language
- TCAP: Transaction Capabilities Application Part
- TCP: Transmission Control Protocol

### SUMMARY OF THE INVENTION

According to the invention, there is provided a method of providing a pre-paid roaming service to a subscriber of a home network when roaming in a visited network, the method comprising the steps set out in claim 1.

In another embodiment, the server instructs a pre-pay roaming platform to set up the call.

In a further embodiment, the server transmits required calling party and called party numbers to the pre-pay platform.

In one embodiment, a call unrelated service point in the home network server detects the feature code and instructs the pre-pay platform in a signal relaying operation.

In another embodiment, the call unrelated service point recognises SCCP headers for intercepting the code.

In a further embodiment, the server comprises a mobile services data platform.

In one embodiment, the call unrelated service point resides on the mobile services data platform providing a distribute hardware architecture.

In another embodiment, an MSC of the visited network routes the code to the home network.

According to another aspect, the invention provides a mobile network server as set out in claim 9.

In one embodiment, the server comprises means for extracting the subscriber's handset number and a required destination number from the incoming signal and for including said data in the request to the pre-pay platform.

In another embodiment, the server comprises a call unrelated service point having relaying functions residing on a mobile services data platform.

In a further embodiment, the call unrelated service point comprises an API for inspecting and manipulating Mobile Application Part protocols.

### DETAILED DESCRIPTION OF THE INVENTION

### Brief Description of the Drawings

The invention will be more clearly understood from the following description of some embodiments thereof, given by way of example only with reference to the accompanying drawings in which:-
Fig. 1 is a diagram illustrating interaction of two networks for provision of pre-paid roaming services;
Fig. 2 is a diagram of the architecture of a network device for processing signals of the method shown in Fig. 1;
Fig. 3 is a diagram showing a generic HLR data structure used by a CUSP; and
Fig. 4 is a diagram showing generic routing tables.

### Description of the Embodiments

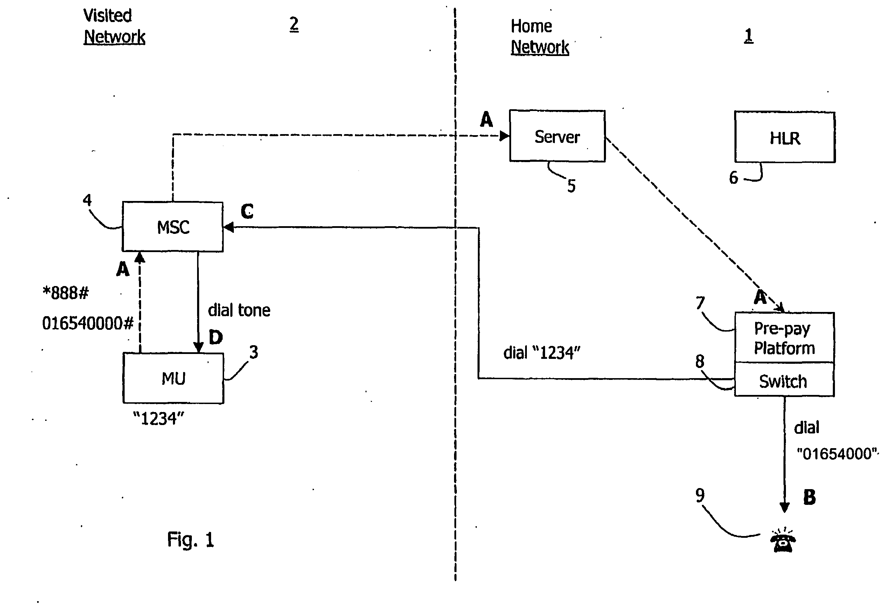

Referring to Fig. 1, a home network 1 and a visited network 2 are in this embodiment GSM. The home network 1 comprises functionality which operates in a non-invasive manner to allow a home subscriber pre-pay for mobile-originating (MO) calls when roaming in another network. This functionality is best explained with reference to the following example.

In a signalling sequence A the subscriber uses the handset 3 to dial a feature code, in this embodiment an unstructured supplementary service code *888 #016540000#. This is the code given to the subscriber for use when he or she wishes to avail of the pre-paid roaming service. An MSC 4 of the visited network relays the signal, containing the code, to the home network 1. The incoming signal in the home network I is received by a server 5. The server 5 filters incoming signals by recognising those of the type above and it terminates these signals and initiates a new signal to a pre-pay platform 7, bypassing the HLR 6. This filtering is performed by use of look-up tables.

This incoming signal is handled in a manner which does not affect usual operation of the home network 1 as the HLR 6 is by-passed. The platform 7 is programmed to process such transactions very efficiently, and with little effect on other operations of the networks 1 or 2.

The signal to the pre-pay platform provides the following information:-
the handsets own number; and
the required destination number.

The platform 7 determines eligibility of the subscriber for the requested pre-paid roaming service. If eligible, it sets up a call, implemented by signals B, C, and D, between the handset 3 and the destination number.

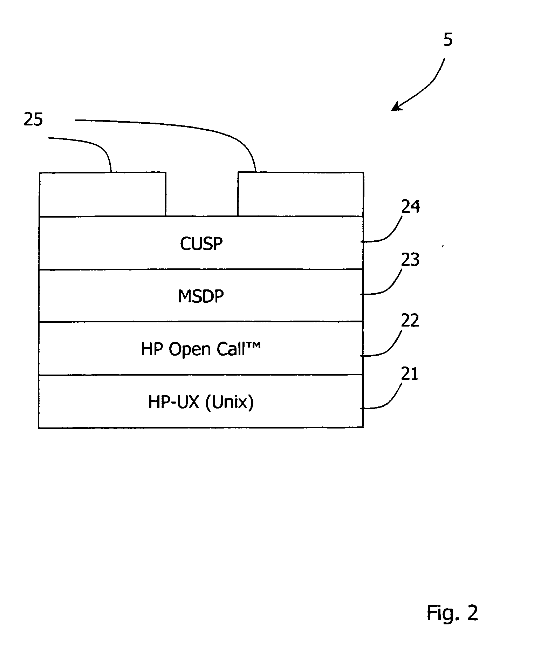

The relaying functionality in the home network server 5 is provided by a call unrelated service point (CUSP) in which basic triggering is based on the SCCP header. The CUSP may alternatively intercept all feature code signals before they reach the home HLR. The CUSP resides on a mobile services data platform (MSDP) as a signalling relay. The architecture is shown in Fig. 2. The layers are, from bottom up:-
21: a HP-UX (Unix) hardware platform;
22: a HPOpen Call^{™} signalling system;
23: MSDP;
24: CUSP; and
25: application logic modules, including a pre-paid roaming module.

In this architecture, the CUSP 24 provides an API for inspecting and manipulating Mobile Application Part (MAP) protocols, including GSM and ANSI-41. For rapid trigger logic analysis a function within CUSP provides the MAP operation type. Each application module 25 is an independent UNIX process which may be started and stopped independently of other applications on the same platform.

The MSDP 23 is a powerful, high availability platform for implementing SS7 SCCP and TCAP based applications. It is primarily oriented towards the mobile application protocols of GSM & ANSI 41 (and PDC), for which APIs are provided, however it is equally capable of supporting intelligent network INAP protocols.

The server 5 is equipped with a high speed, real-time database, which can support many millions of subscriber or routing records. The size and complexity of the real-time database is dependent on the application. For management purposes data is also maintained on disk in a SQL relational database (but this is not used by the real-time application logic).

For very high service availability, the MSDP 23 is deployed in a fault-tolerant, distributed architecture over multiple sites, supporting both system and site redundancy. The server 5 is equipped with a comprehensive operations and management module, which provides a single point of access for all management operations, including data provisioning.

For excellent flexibility, trigger and service logic modules may be written in SDL and C, for which an internal API is available.

For invocation of external SCF/SDF functions, a wide range of protocols are available to applications, including:
• MAP. Typically MAP may be used to forward a message or to query an HLR, for example an ANY_TIME_INTERROGATION or an SRI_SM operation.
• INAP. CS-1/2 INAP is available for querying an external service data point. Additional messages may easily be added to the message library for other kinds of query.
• Any commonly available TCP/IP or X.25 based protocol stack.
• CORBA
• SQL

The CUSP 24 can modify a MAP payload even when relaying at the SCCP level. This will permit minor protocol conversion to be performed on the fly. The MSDP and, therefore, CUSP 24 subscription database is constructed on the concepts of an HLR. All entry may be dual keyed by MSISDN or IMSI (MDN & MIN in ANSI 41) or equivalents. An entry is made up of packages of data. Each package provides an element of functionality. An application may comprise a number of related packages. All applications share the same subscription database, using the necessary packages.

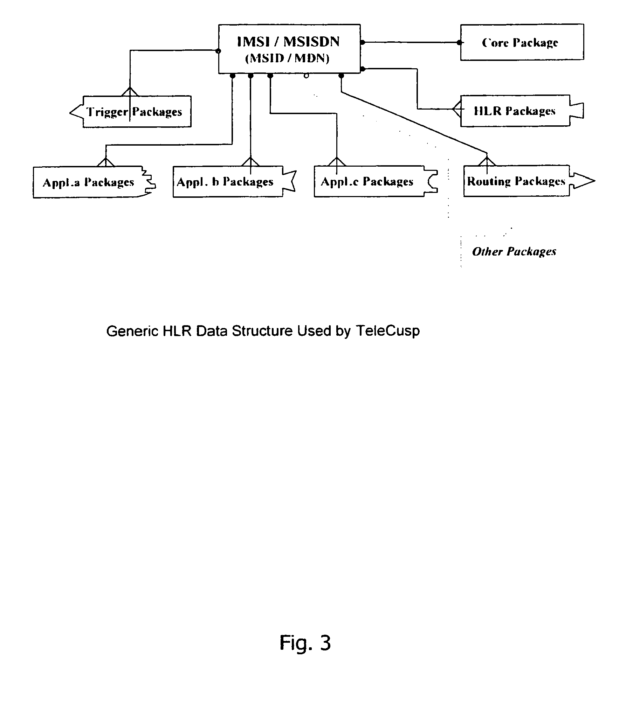

Fig. 3 shows the generic data structure that is used by CUSP applications in the layer 2 of the server 5. For ease of management, application specific routing tables are also maintained within the same structure, using special pseudo IMSIs as the key and special routing packages.

CUSP supports general purpose number analysis and routing tables that can be used to perform basic relaying of SCCP messages that do not require special routing by applications. These tables effectively provide global title translation functionality and are organised by translation type. The tables for standard translation types are used for efficient relaying of messages when no trigger logic is invoked. They are available to trigger logic. Special application specific tables (i.e. special translation types) may be defined for application specific routing.

Applications may, of course, have their own routing information database. For example, a general purpose GSM address register or a mobile number portability application will have packages containing routing tables for specific MSISDNs or IMSIs. Typically, if an entry is not found in the database, the application may relay using the general routing tables.

Although it is possible for application routing data to use point codes, it is strongly recommended that all application routing is performed using logical addresses (i.e. global title), which can then be translated by the generic title translation facilities. This avoids having to change application data in the event of reconfiguration of the SS7 routing.

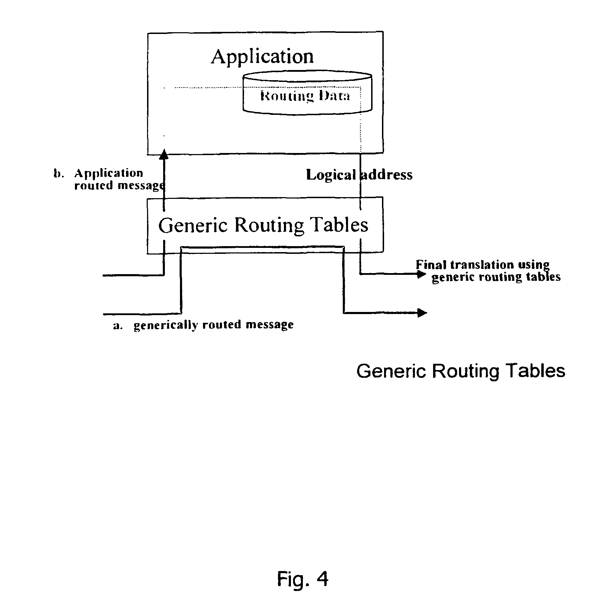

Fig. 4 shows the role of the generic routing tables. They are used for handling all incoming and outgoing messages. An incoming message is analysed and routed according to its SCCP/MTP address. The tables are used both for onward routing and to select the application. Onward routing by the applications is usually by logical address (i.e. global title), which, if necessary, may then be translated using the generic routing tables. Where the application sends a reply to the original message, the originating address is, of course, used.

The MSDP 23 supports very high availability fault tolerant configurations, mated pairs, etc. The CUSP 24 can be implemented on any suitable configuration supported by the MSDP 23. In a typical configuration two or more separate platforms are deployed in a redundant configuration at geographically separate sites.

The invention is not limited to the embodiments described, but may be varied in construction and detail. For example the same functionality may be provided in a non-GSM home network in which the relevant feature codes perform equivalent functions.

## Claims

1. A method of providing a pre-paid roaming service to a subscriber of a home network when roaming in a visited network, the method comprising the steps of:
the subscriber (3) dialling a feature code;
the visited network (2) routing the code to the home network (1);
the home network (1) determining that the feature code establishes pre-paid roaming eligibility for the subscriber and sets up a call (B, C, D) for the subscriber;
wherein the code is processed by a server in the home network; and
wherein the server (5) intercepts the feature code signal before it reaches a HLR (6) of the home network (1).

2. A method as claimed in claim 1, wherein the server (5) instructs a pre-pay roaming platform (7) to set up the call.

3. A method as claimed in claim 2, wherein the server (5) transmits required calling party and called party numbers to the pre-pay platform (7).

4. A method as claimed in any preceding claim, wherein a call unrelated service point (24) in the home network server detects the feature code and instructs the pre-pay platform in a signal relaying operation.

5. A method as claimed in claim 4, wherein the call unrelated service point recognises SCCP headers for intercepting the code.

6. A method as claimed in claims 4 or 5, wherein the server comprises a mobile services data platform (23).

7. A method as claimed in any of claims 4 to 6, wherein the call unrelated service point resides on the mobile services data platform providing a distributed hardware architecture.

8. A method as claimed in any preceding claim, wherein an MSC of the visited network routes the code to the home network.

9. A mobile network server comprising:
means for receiving signals from a foreign network,
means for recognising a feature code in said signals indicating that a subscriber roaming in the foreign network wishes to make a pre-paid call, and
means for transmitting a request for a pre-paid call to a pre-pay platform when such a feature code is detected said request bypassing a HLR of the network.

10. A mobile network server as claimed in claim 9, wherein the server comprises means for extracting the subscriber's handset number and a required destination number from the incoming signal and for including said data in the request to the pre-pay platform.

11. A mobile network server as claimed in claims 9 or 10, wherein the server comprises a call unrelated service point having relaying functions residing on a mobile services data platform.

12. A mobile network server as claimed in claim 11, wherein the call unrelated service point comprises an API for inspecting and manipulating Mobile Application Part protocols.

13. A computer program product comprising software code portions for performing a method as claimed in any of claims 1 to 8, when executing all the respective method steps on a digital computer.

## Patentansprüche

1. Verfahren, um einem Abonnenten eines Heimnetzwerks beim Roamen in einem besuchten Netzwerk einen Prepaid-Roaming-Dienst zu bieten, wobei das Verfahren die folgenden Schritte beinhaltet:
Anwählen eines Feature-Codes durch den Abonnenten (3);
Leiten des Codes zu dem Heimnetzwerk (1) durch das besuchte Netzwerk;
Ermitteln durch das Heimnetzwerk (1), ob der Feature-Code eine Prepaid-Roaming-Berechtigung für den Abonnenten bewirkt und einen Ruf (B, C, D) für den Abonnenten einrichtet;
wobei der Code von einem Server in dem Heimnetzwerk verarbeitet wird; und
wobei der Server (5) das Feature-Code-Signal abfängt, bevor es ein HLR (Home Location Register) (6) des Heimnetzwerks (1) erreicht.

2. Verfahren nach Anspruch 1, wobei der Server (5) eine Prepay-Roaming-Plattform (7) anweist, den Anruf einzurichten.

3. Verfahren nach Anspruch 2, wobei der Server (5) die benötigte Nummer der anrufenden Partei und die benötigte Nummer der angerufenen Partei zur Prepay-Plattform (7) sendet.

4. Verfahren nach einem der vorherigen Ansprüche, wobei ein nicht rufbezogener Dienstknoten (24) im Heimnetzwerk-Server den Feature-Code erfasst und die Prepay-Plattform in einem Signalweiterleitungsvorgang anweist.

5. Verfahren nach Anspruch 4, wobei der nicht rufbezogene Dienstknoten SCCP-Header zum Abfangen des Codes erkennt.

6. Verfahren nach Anspruch 4 oder 5, wobei der Server eine Mobilfunkdienste-Datenplattform (23) umfasst.

7. Verfahren nach einem der Ansprüche 4 bis 6, wobei sich der nicht rufbezogene Dienstknoten auf der Mobilfunkdienste-Datenplattform befindet, die eine verteilte Hardware-Architektur bereitstellt.

8. Verfahren nach einem der vorherigen Ansprüche, wobei eine MSC (Mobile Switching Centre) des besuchten Netzwerks den Code zum Heimnetzwerk leitet.

9. Mobilfunknetzserver, der Folgendes umfasst:
Mittel zum Empfangen von Signalen von einem Fremdnetzwerk;
Mittel zum Erkennen eines Feature-Codes in den genannten Signalen, der anzeigt, dass ein in dem Fremdnetzwerk roamender Abonnent einen Prepaid-Ruf tätigen möchte, und
Mittel zum Senden einer Anforderung für einen Prepaid-Ruf zu einer Prepay-Plattform, wenn ein solcher Feature-Code erfasst wird, wobei die genannte Anforderung ein HLR des Netzwerks umgeht.

10. Mobilfunknetzserver nach Anpruch 9, wobei der Server Mittel zum Extrahieren der Handset-Nummer des Abonnenten und eine benötigte Zielnummer von dem eingehenden Signal und zum Einbeziehen der genannten Daten in die Anforderung an die Prepay-Plattform umfasst.

11. Mobilfunknetzserver nach Anpruch 9 oder 10, wobei der Server einen nicht rufbezogenen Dienstknoten mit Weiterleitungsfunktionen hat, die sich auf einer Mobilfunkdienste-Datenplattform befinden.

12. Mobilfunknetzserver nach Anpruch 11, wobei der nicht rufbezogene Dienstknoten eine API (Application Programming Interface) zum Prüfen und Manipulieren von Mobile Application Part Protokollen umfasst.

13. Computerprogrammprodukt, das Softwarecode-Teile zum Ausführen eines Verfahrens nach einem der Ansprüche 1 bis 8 umfasst, wenn alle jeweiligen Verfahrensschritte auf einem digitalen Computer ausgeführt werden.

## Revendications

1. Un procédé destiné à fournir un service d'itinérance prépayé à un abonné à un réseau de rattachement lorsqu'il se trouve en itinérance dans un réseau visité, le procédé comprenant les opérations suivantes :
la composition par l'abonné (3) d'un code de fonction,
l'acheminement par le réseau visité (2) du code vers le réseau de rattachement (1),
la détermination par 1e réseau de rattachement (1) que le code de fonction établit une admissibilité à une itinérance prépayée pour l'abonné et établit un appel (B, C, D) pour l'abonné,
où le code est traité par un serveur du réseau de rattachement, et
où le serveur (5) intercepte le signal du code de fonction avant qu'il n'atteigne un HLR (6) du réseau de rattachement (1).

2. Un procédé selon la Revendication 1, où le serveur (5) donne l'instruction à une plate-forme d'itinérance à prépaiement (7) d'établir l'appel.

3. Un procédé selon la Revendication 2, où le serveur (5) transmet les numéros nécessaires de la partie appelante et de la partie appelée à la plate-forme de prépaiement (7).

4. Un procédé selon l'une quelconque des Revendications précédentes, où un point de service indépendant de l'appel (24) sur le serveur du réseau de rattachement détecte le code de fonction et donne une instruction à la plate-forme de prépaiement par une opération de relayage de signal.

5. Un procédé selon la Revendication 4, où le point de service indépendant de l'appel reconnaît des entêtes SCCP afin d'intercepter le code.

6. Un procédé selon les Revendications 4 ou 5, où le serveur comprend une plate-forme de données de services mobiles (23).

7. Un procédé selon l'une quelconque des Revendications 4 à 6, où le point de service indépendant de l'appel réside sur la plate-forme de données de services mobiles fournissant une architecture matérielle répartie.

8. Un procédé selon l'une quelconque des Revendications précédentes, où un MSC du réseau visité achemine le code vers le réseau de rattachement.

9. Un serveur de réseau mobile comprenant :
un moyen de recevoir des signaux provenant d'un réseau étranger,
un moyen de reconnaître un code de fonction dans lesdits signaux indiquant qu'un abonné en itinérance sur le réseau étranger souhaite passer un appel prépayé, et
un moyen de transmettre une demande pour un appel prépayé à une plate-forme de prépaiement lorsqu'un tel code de fonction est détecté, ladite demande contournant un HLR du réseau.

10. Un serveur de réseau mobile selon la Revendication 9, où le serveur comprend un moyen d'extraire le numéro de combiné de l'abonné et un numéro de destination nécessaire du signal entrant et d'inclure lesdites données dans la demande adressée à la plate-forme de prépaiement.

11. Un serveur de réseau mobile selon la Revendication 9 ou 10, où le serveur comprend un point de service indépendant de l'appel possédant des fonctions de relais résidant sur une plate-forme de données de services mobiles.

12. Un serveur de réseau mobile selon la Revendication 11, où le point de service indépendant de l'appel comprend une API destinée à inspecter et à manipuler des protocoles MAP (sous-système d'application mobile).

13. Un programme informatique comprenant des parties de code logiciel destinées à exécuter un procédé selon l'une quelconque des Revendications 1 à 8 lorsqu'il exécute toutes les opérations de procédé considérées sur un ordinateur numérique.
